**Europäisches Patentamt**

**European Patent Office**

**Office européen des brevets**

(11) Veröffentlichungsnummer: **0 140 237**
**A2**

(12) **EUROPÄISCHE PATENTANMELDUNG**

(21) Anmeldenummer: **84112167.6**

(22) Anmeldetag: **11.10.84**

(51) Int. Cl.⁴: **A 47 J 37/04**

(30) Priorität: **14.10.83 DE 8329634 U**

(43) Veröffentlichungstag der Anmeldung:
**08.05.85 Patentblatt 85/19**

(84) Benannte Vertragsstaaten:
**AT BE CH DE FR GB IT LI NL SE**

(71) Anmelder: **WOPEX V.O.F.**
**Malderburcht Straat 544**
**NL-6535 NV Nijmegen(NL)**

(72) Erfinder: **van den Berg, Christiaan**
**Malderburchtstraat 544**
**NL-6535 NV Nijmegen(NL)**

(74) Vertreter: **Patentanwälte Schulze Horn und Hoffmeister**
**Goldstrasse 36**
**D-4400 Münster(DE)**

(54) Vorrichtung zum Erhitzen von Grillgut.

㉗ Mit einem Rotationsgrillantrieb zu verbindende Vorrichtung zum Erhitzen eines aus lockeren Einzelteilen bestehenden Grillgutes, die einen mehrteiligen Einsatz mit längs zu einer Spießdrehachse und rotationssymmetrisch zur Achse ausgerichteten Aufnahmebereichen aufweist, deren nach außen hin offene Seiten durch eine Korbabdeckung verschließbar sind, bei der die Aufnahmebereiche des Einsatzes aus einzelnen Wannen (2, 12) bestehen, die beidseitig an Begrenzungsplatten (5, 15) der Vorrichtung festlegbar sind und jede Aufnahmewanne (2, 12) eine verschließbare Korbabdeckung (4) aufweist.

Fig 2

EP 0 140 237 A2

Croydon Printing Company Ltd.

## Vorrichtung zum Erhitzen von Grillgut

Die Erfindung betrifft eine mit einem Rotationsgrillantrieb zu verbindende Vorrichtung zum Erhitzen eines aus lockeren Einzelteilen bestehenden Grillgutes, die einen mehrteiligen Einsatz mit längs zu einer Spießdrehachse und rotationssymmetrisch zur Achse ausgerichteten Aufnahmebereichen aufweist, deren nach außen hin offene Seiten durch eine Korbabdeckung verschließbar sind.

Derartige Vorrichtungen, in denen Grillgut wie Pommes frites, Würstchen oder dergleichen fettfrei gebacken werden kann, sind durch die Patentanmeldung P 28 11 184.4 des Anmelders bekannt und haben sich in der Praxis gut bewährt. Die bekannte Vorrichtung weist einen Einsatz auf mit Stegen, die den Einsatz in wannenartige Aufnahmebereiche unterteilen und an der Innenseite eines äußeren, zylindermantelförmigen Drahtgestells anliegen. Während des Rotierens der Vorrichtung wird das in den Aufnahmebereichen des Einsatzes befindliche Grillgut in geringer Entfernung an einer Wärmequelle eines Grillgerätes vorbeigeführt und aufgrund der ständigen Umwälzung gleichmäßig erhitzt.

Probleme ergaben sich beim Befüllen bzw. Entleeren der Vorrichtung, da hierzu die Vorrichtung aus dem Grillgerät herausgenommen und zumindest teilweise auseinandergenommen werden muß. Außerdem sind Einsatz und das äußere Drahtgestell so sperrig gestaltet, daß sie zur Reinigung schlecht in einer Spülmaschine untergebracht werden können.

Der Erfindung liegt die Aufgabe zugrunde, eine Vorrichtung der genannten Art anzugeben, die eine Beschickung mit Grillgut bzw. eine Entleerung erlaubt, ohne daß die Vorrichtung auseinandergenommen werden muß. Die Vorrichtung soll ferner einfach aufgebaut und im Vergleich zum Stand der Technik wesentlich leichter zu handhaben sein.

Die Aufgabe wird erfindungsgemäß dadurch gelöst, daß die Aufnahmebereiche des Einsatzes aus einzelnen Wannen bestehen, die beidseitig an Begrenzungsplatten der Vorrichtung festlegbar sind und daß jede Aufnahmewanne eine verschließbare Korbabdeckung aufweist.

Die Aufnahmewannen der erfindungsgemäßen Vorrichtung können unabhängig voneinander nach Öffnen ihrer Korbabdeckung mit Grillgut beschickt werden, bzw. kann nach Beendigung der Hitzeeinwirkung das gegrillte Gut den Wannen entnommen werden, ohne daß die Vorrichtung aus dem Grillgerät herausgenommen werden muß. Es ist somit möglich, in der Vorrichtung auch Grillgut mit unterschiedlicher Garzeit zuzubereiten, wobei das fertig gegrillte Gut nach Unterbrechung des Grillantriebes aus der Wanne entnommen, gegebenenfalls die Wanne neu beschickt und anschließend weitergegrillt werden kann. Wie hieraus ersichtlich ist, läßt sich in der erfindungsgemäßen Vorrichtung die vorhandene Grillkapazität optimal ausnutzen.

Vorteilhaft können die Wannen der Vorrichtung auch als Servierschalen für das fertige Grillgut bzw. als Aufbewahrungsschalen verwendet werden, sofern das Grillgut nicht sofort verzehrt werden soll. Weitere Vorteile bestehen darin, daß die Einzelteile der Vorrichtung flach und wenig sperrig gebaut sind, wodurch ihre Reinigung erheblich vereinfacht wird. Die Teile der Vorrichtung lassen sich ferner einfach zusammenbauen und zerlegen, wobei sie im zerlegten Zustand wenig Stauraum beanspruchen.

Als Form für die Vorrichtung ist vorzugsweise eine Zylinderform vorgesehen, in der die Wannen mit dem Grillgut an der Peripherie rotationssymmetrisch zur Drehachse angeordnet sind. Zwei Wannenanordnungen haben sich dabei als vorteilhaft erwiesen. In einer ersten Anordnung (Figur 2 und 3), bei der die Wannen im Querschnitt trapezförmig gestaltet sind und an den zu den Begrenzungsplatten gerichteten Seitenflächen Einstecklaschen aufweisen, bilden die Wannen einen polygonalen Drehkörper. In der zweiten Anordnung (Figur 5 und 7) sind im Querschnitt kreissegmentartige Wannen vorgesehen, die nach außen hin schon die Zylinderform der Vorrichtung vorgeben.

Entsprechend diesen möglichen Anordnungen der Wannen sind auch die Begrenzungsplatten bzw. die Abdeckungen der Wannen gestaltet. Bei der ersten Anordnung sind kreisförmige Begrenzungsplatten vorgesehen, die rotationssymmetrisch angeordnete Schlitze für die Einstecklaschen der Wannen und Rastaussparungen für die Halteelemente der Abdeckungen an der Plattenperipherie aufweisen. Laschen und Schlitze stellen vorteilhafte Steckverbindungsteile zwischen Wannen und Begrenzungsplatten dar. Da diese Art der Verbindung einfach ist und die Laschen an den Wannen gleichzeitig als Griffteile verwendet werden können. Die Ausbildung der Vorrichtung ist aber nicht auf diese Art der Verbindung zwischen den Teilen beschränkt.

Für die zweite Wannenanordnung sind polygonale Begrenzungsplatten vorgesehen, die randseitig Anlageflächen für die Wannen aufweisen. Unter polygonal wird dabei verstanden, daß die Grundfläche der Platten ein regelmäßiges Vieleck ist, z. B. ein Viereck, Fünfeck usw.. Die Verbindung der Begrenzungsplatten zu den Wannen kann wie bei der ersten Anordnung über Einschubstege auf den Anlageflächen erfolgen. Es können aber auch auf den Anlageflächen Stege vorgesehen sein, die die Wannen seitlich begrenzen, wobei der eigentliche Zusammenhalt der Teile erst nach Festlegung des Spießes, der die Begrenzungsplatten miteinander verbindet, erfolgt.

Auf weitere, in den Unteransprüchen genannte Ausbildungen der Vorrichtung wird zusammen mit deren Vorteilen in der Beschreibung eingegangen. Ein Ausführungsbeispiel der Erfindung ist in der Zeichnung dargestellt und wird im folgenden näher beschrieben. Es zeigen:

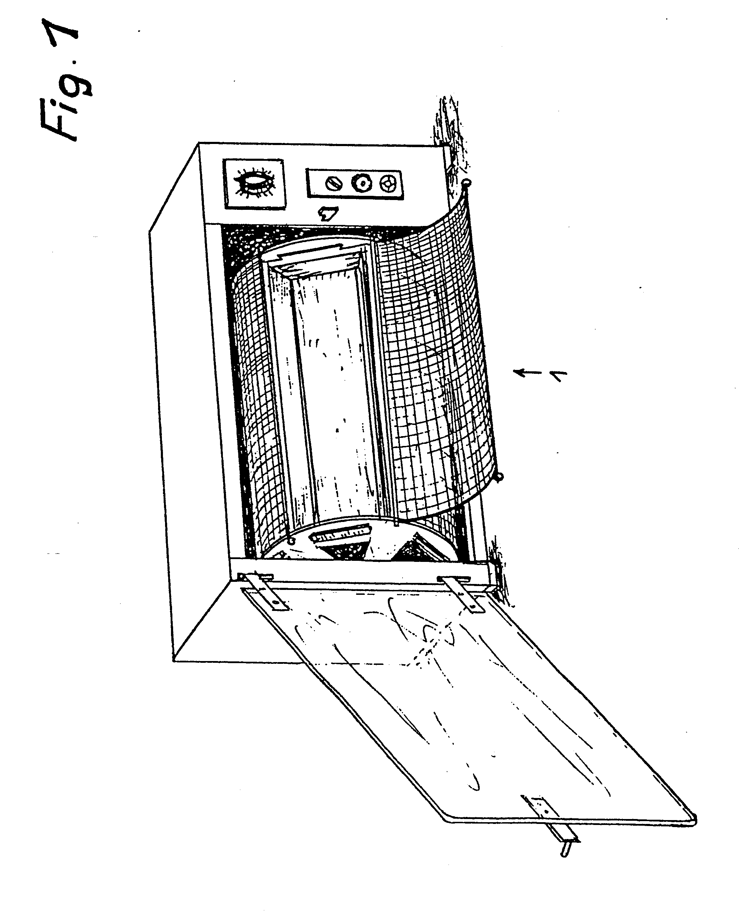

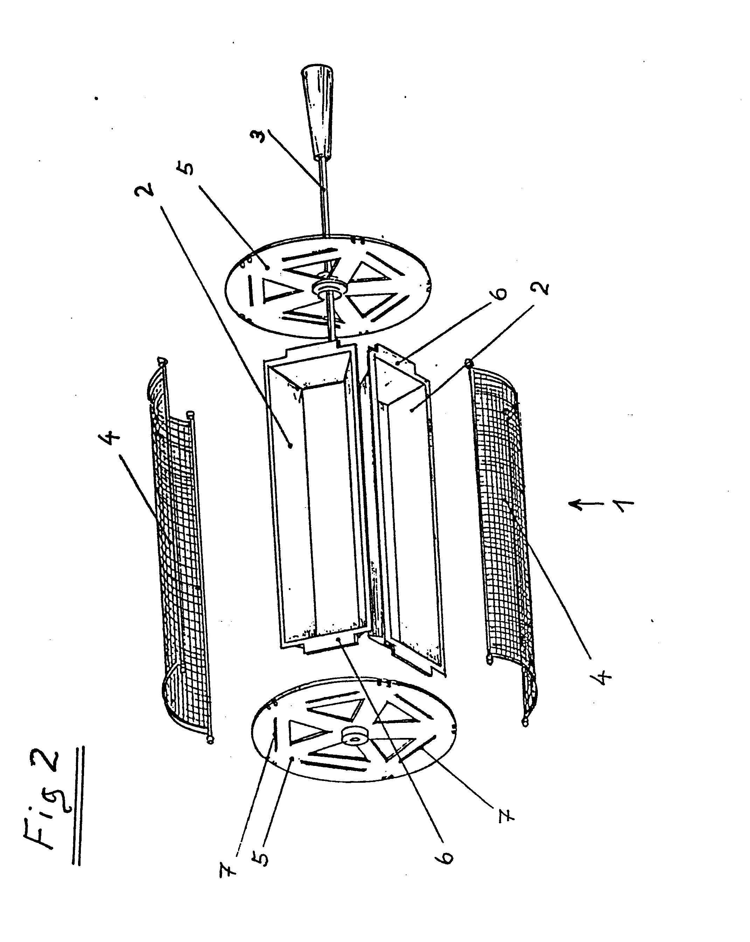

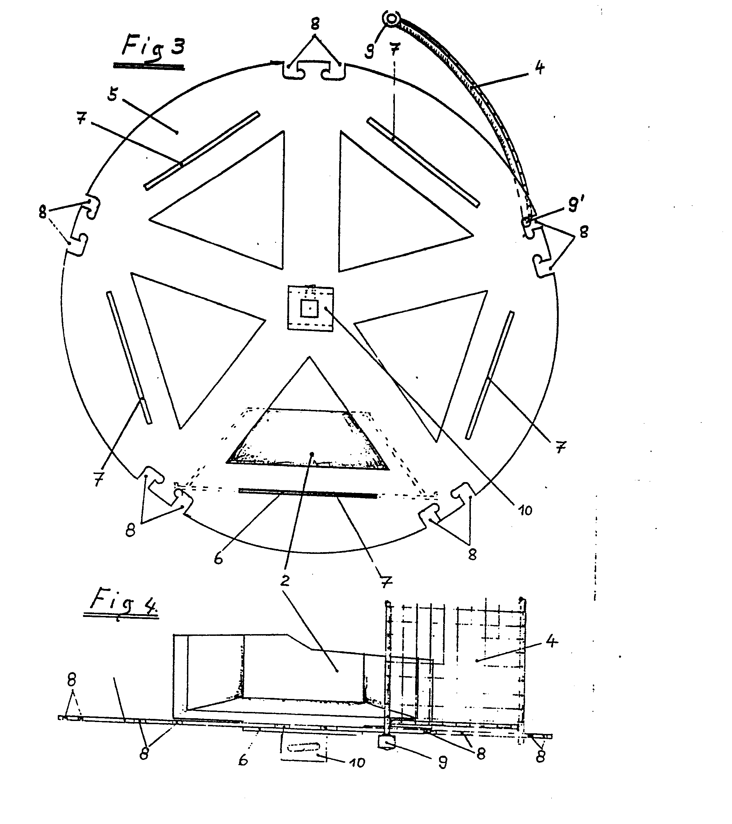

Figur 1 eine in einem Grillofen eingebaute erfindungsgemäße Vorrichtung,

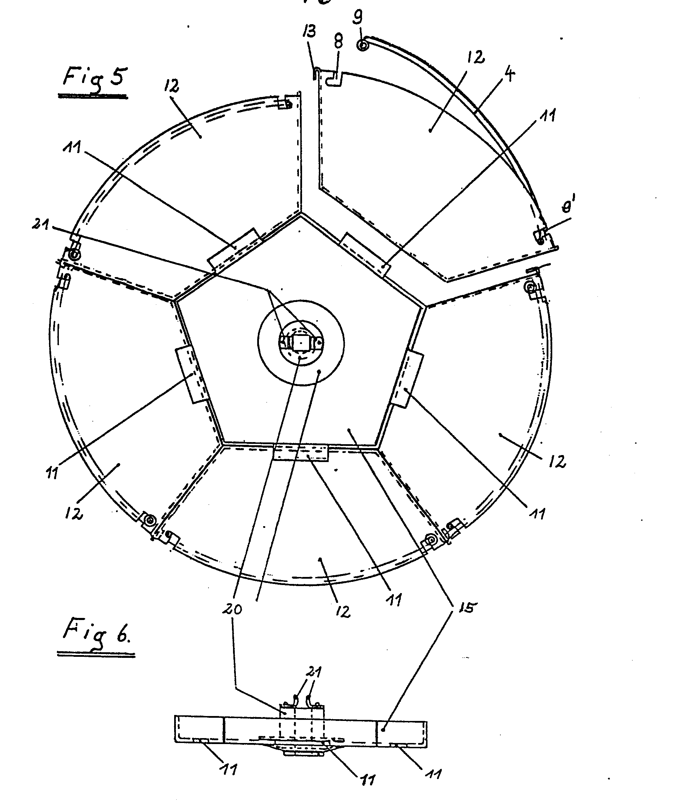

Figur 2 eine Ausführungsform der Vorrichtung in auseinandergezogener Darstellung,

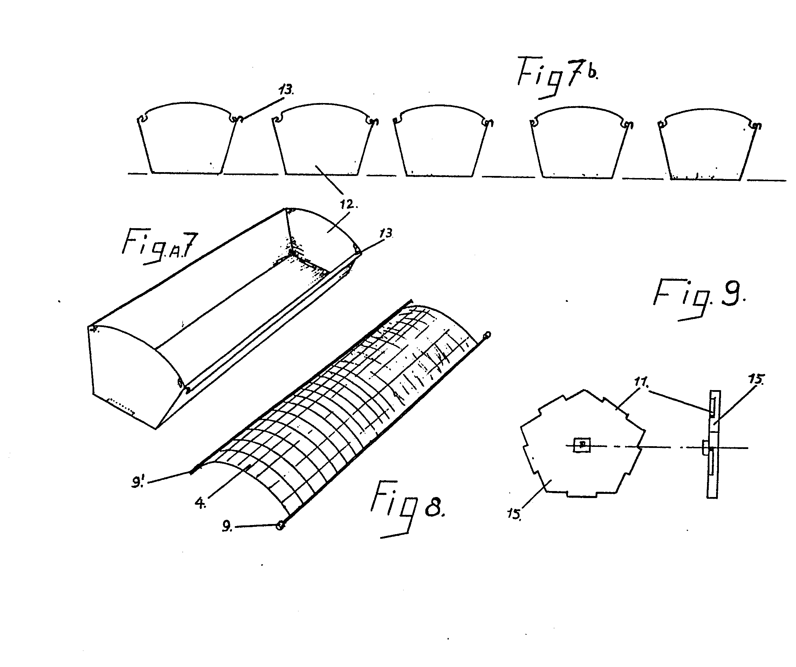

Figur 3 eine Seitenansicht auf eine Begrenzungsplatte der Vorrichtung gemäß Figur 2,

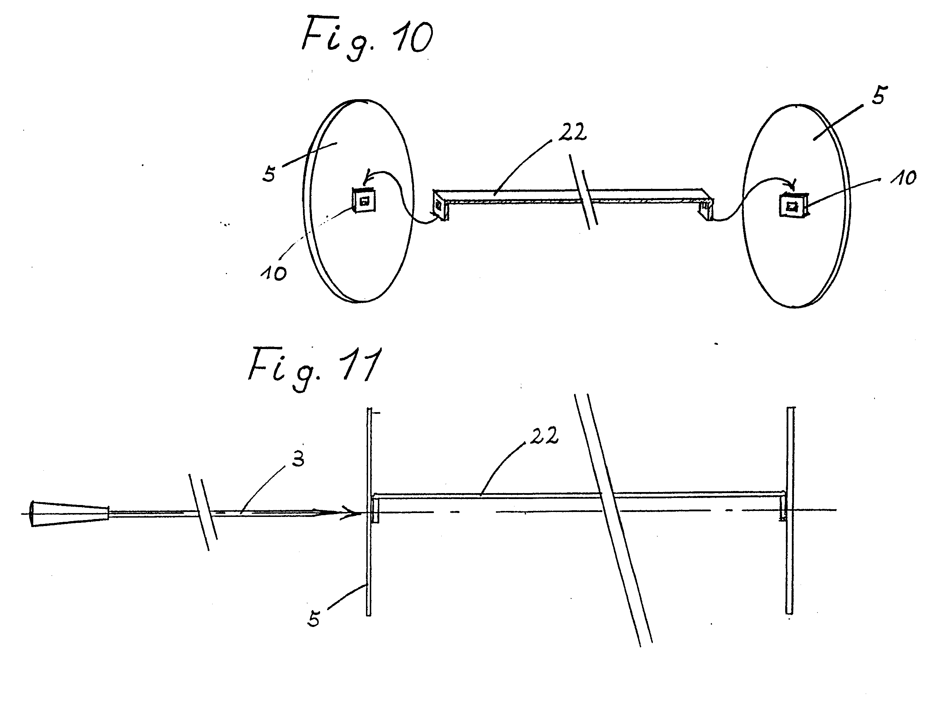

Figur 4 die Verbindung einer Wanne und einer Korbabdeckung an der Begrenzungsplatte der Figur 3,

Figur 5 eine Seitenansicht auf eine Begrenzungsplatte und daran festgelegten Wannen in einer zweiten Ausführungsform der Vorrichtung,

Figur 6 eine Aufsicht auf die Begrenzungsplatte der Figur 5,

Figur 7 a und 7 b eine Ansicht einer Wanne sowie eine schematische Darstellung der Festlegung der Wannen untereinander,

Figur 8 eine Ansicht einer Wannenabdeckung und

Figur 9 eine für die Wanne der Figur 7 a geeignete
Begrenzungsplatte in Seitenansicht und Aufsicht.

Figur 10 eine Ansicht der Begrenzungsplatten der Vorrichtung mit einem Verbindungsgestänge und

Figur 11 einen Schnitt durch die zusammengesetzten Teile
der Figur 10.

In Figur 1 ist ein Grillofen dargestellt, bei dem der
Backraum durch eine durchsichtige Tür geschlossen werden
kann. Innerhalb des Backraumes ist eine erfindungsgemäße
Vorrichtung 1 zum Erhitzen eines aus lockeren Einzelteilen bestehenden Grillgutes über einen Spieß eingehängt,
der mit Hilfe eines Motors des Grillofens (nicht dargestellt) angetrieben wird. Die Vorrichtung 1 rotiert mit
dem Spieß während des Erhitzungsvorganges, wobei der
Inhalt durch Konvektions- und/oder Strahlungswärme einer
Wärmequelle im Ofen erwärmt und gebacken wird.

Wie aus Figur 2 besonders deutlich ersichtlich ist,
besteht die Vorrichtung 1 aus Aufnahmewannen 2 für das
Grillgut, die in der Vorrichtung rotationssymmetrisch um
eine durch einen Spieß 3 gebildete Längsachse angeordnet
sind, aus rostfreiem Drahtgeflecht gefertigten Abdeckungen 4 für jede Wanne 2 und zwei seitlichen Begrenzungsplatten 5, die durch den Spieß 3 miteinander verbunden
sind. Anstelle des Spießes 3 kann die Vorrichtung an den
Begrenzungsplatten 5 auch Achsstummel aufweisen, die in
eine entsprechende Antriebsvorrichtung des Grillofens
eingesetzt werden können. Insgesamt bilden die Wannen 2,
Abdeckungen 4 und Platten 5 einen zylinderförmigen Vorrichtungskörper, dessen Zylindermantel aus dem Drahtgeflecht der einzelnen Abdeckungen 4 besteht.

In der Vorrichtung der Figur 2 sind insgesamt fünf längliche Wannen 2 vorgesehen, von denen jede einen trapezförmigen Querschnitt aufweist. Die Wannen 2 bilden zusammen einen prismatischen Körper, dessen Grundfläche ein regelmäßiges Fünfeck ist. An den Schmalseiten der Wannen 2 sind Laschen 6 angeformt, die in entsprechende Schlitze 7 der Begrenzungsplatten 5 eingesteckt werden können. In Figur 3 ist die Lage einer mit einer Begrenzungsplatte 5 verbundenen Wanne 2 gestrichelt angedeutet.

Die Begrenzungsplatte 5 ist in der Ausführungsform gemäß Figur 2 und 3 kreisförmig ausgebildet und entspricht in ihrem Durchmesser dem Zylinderdurchmesser der Vorrichtung. In der Platte 5 sind die Schlitze 7 entlang den Seitenrändern eines regelmäßigen Fünfeckes in gleichen Abständen angeordnet. Die Begrenzungsplatten 5 weisen ferner an ihrer Peripherie Rastaussparungen 8 auf, in denen Halteelemente 9 und 9' der Abdeckungen 4 festgelegt werden können. Die Halteelemente 9 und 9' bestehen aus Achsstummeln, die an den Kanten der Abdeckung 4 seitlich abstehen. Die Achsstummel 9 an den oberen Kanten der Abdeckung 4 tragen gemäß den Figuren 3 und 4 an ihrem Ende ein zylinderförmiges Griffteil, das das Aufklappen der Abdeckung erleichtert und bei geschlossener Abdeckung als Sperre dient, die ein seitliches Verschieben der Abdeckung verhindert. Nahezu kreisförmige Erweiterungen am Grunde der Rastaussparungen 8, in die die Achsstummel 9 und 9' gleiten können, gewährleisten, daß die Abdeckungen 4 auch während der Rotation der Vorrichtung an den Platten 5 gehalten werden. Die Begrenzungsplatten 5 weisen ferner in ihrer Mitte an die Außenkonturen des Spießes 3 angepaßte, gegenüberliegende Bohrungen mit einem aufgesetzten Verschlußteil 10 auf, über das die Begrenzungsplatten 5 an dem Spieß 3 festgelegt werden können und somit ein Zusammenhalt der Vorrichtungsteile erreicht wird.

Neben kreisförmigen Begrenzungsplatten gemäß Figur 3 sind in einer zweiten Ausführungsform der Vorrichtung gemäß Figur 5 Begrenzungsplatten 15 vorgesehen, deren Grundfläche ein regelmäßiges Fünfeck ist. Die Begrenzungsplatten 15 sind randseitig gefalzt. Die Falzränder bilden Anlageflächen für die Aufnahmewannen 12 der Vorrichtung, wobei Begrenzungsstege 11 auf den Anlageflächen die Wannen 15 bei zusammengesetzter Vorrichtung seitlich einspannen. Um die Zylinderform der Vorrichtung zu erhalten, sind die Wannen 15 bei dieser Ausführungsform im Querschnitt kreissegmentartig gestaltet und bilden, wenn sie zusammengesetzt sind, einen trommelförmigen Körper. Ein Längsrand einer Wanne 15 weist eine hakenförmig gebogene Leiste 13 auf, die über einen leistenfreien Längsrand einer benachbarten Wanne geschoben werden kann. Hierdurch wird ein Verbund der Wannen 15 untereinander erreicht. Aufgrund der neuen Gestaltung der Vorrichtung sind in dem oberen Randbereich der Wannenschmalseiten nun die Rastaussparungen 8 für die Halteelemente 9 und 9' der Wannenabdeckung 4 angebracht. Wie insbesondere aus Figur 6 ersichtlich ist, weisen die Begrenzungsplatten 15 ein Verschlußteil 20 auf, bei dem die Festlegung der Platten 15 am Spieß 3 auf einfache Weise über Klemmstege 21 erfolgt.

In den Figuren 7 a und 7 b sind eine Wanne 12 der Vorrichtung und schematisch die Verbindungsmöglichkeit der Wannen 12 untereinander über die Hakenleisten 13 dargestellt. Falls es erforderlich ist, kann der der Hakenleiste 13 gegenüberliegende Rand der Wanne 12 eine Einhakleiste (nicht dargestellt) für die Leiste 13 aufweisen.

Bei der Wanne der Figur 7 a ist eine weitere Verbindungsvariante zwischen Wanne und Begrenzungsplatte 15 angedeutet. Die Wanne 12 weist im Boden nahe an ihren Schmalseitenflächen Schlitze 14 auf, in die die Stege 11 der in Figur 9 gezeigten Begrenzungsplatte 15 eingeschoben werden können.

Gemäß den Figuren 10 und 11 können die Begrenzungsplatten unabhängig von ihrer Ausbildung neben dem Spieß 3 auch noch durch ein Verbindungsgestänge 22 verbunden sein. Das Verbindungsgestänge 22 besteht aus einem flachen Leistenabschnitt, der an seinen Enden gefalzt ist. Die Falzenden des Verbindungsgestänges 22 weisen Durchtrittsöffnungen für den Spieß 3 auf und werden beim Zusammenbau der Vorrichtung, wie in Figur 10 durch Pfeile angedeutet ist, in Stecklaschen an den Verschlußteilen 10 der Begrenzungsplatten eingehakt. Es ist somit gewährleistet, daß die Teile der Vorrichtung auch bei herausgezogenem Spieß 3 zusammengehalten werden.

Patentansprüche:

1. Mit einem Rotationsgrillantrieb zu verbindende Vorrichtung zum Erhitzen eines aus lockeren Einzelteilen bestehenden Grillgutes, die einen mehrteiligen Einsatz mit längs zu einer Spießdrehachse und rotationssymmetrisch zur Achse ausgerichteten Aufnahmebereichen aufweist, deren nach außen hin offene Seiten durch eine Korbabdeckung verschließbar sind, dadurch gekennzeichnet, daß die Aufnahmebereiche des Einsatzes aus einzelnen Wannen (2, 12) bestehen, die beidseitig an Begrenzungsplatten (5, 15) der Vorrichtung festlegbar sind und daß jede Aufnahmewanne (2, 12) eine verschließbare Korbabdeckung (4) aufweist.

2. Vorrichtung nach Anspruch 1, dadurch gekennzeichnet, daß die Vorrichtung (1) aus einem zylinderförmigen Drehkörper besteht.

3. Vorrichtung nach Anspruch 1 oder 2, dadurch gekennzeichnet, daß die Wannen (2) einen polygonalen Drehkörper bilden.

4. Vorrichtung nach Anspruch 1 oder 2, dadurch gekennzeichnet, daß die Wannen (12) einen zylinderförmigen Drehkörper bilden.

5. Vorrichtung nach den Ansprüchen 1 bis 3, gekennzeichnet durch im Querschnitt trapezförmige Wannen (2), die an den zu den Begrenzungsplatten (5) gerichteten Seitenflächen Einstecklaschen (6) aufweisen.

6. Vorrichtung nach den Ansprüchen 1 bis 3, dadurch gekennzeichnet, daß die Abdeckungen (4) Halteelemente (9, 9') aufweisen und über die Halteelemente (9, 9' an den Begrenzungsplatten (5) festlegbar sind.

A2

7. Vorrichtung nach Anspruch 5 oder 6, gekennzeichnet durch kreisförmige Begrenzungsplatten (5), die rotationssymmetrisch angeordnete Schlitze (7) für die Einstecklaschen (6) der Wannen (2) und Rastaussparungen (8) für die Halteelemente (9, 9') der Abdeckungen (4) an der Plattenperipherie aufweisen.

8. Vorrichtung nach den Ansprüchen 1, 2 oder 4, gekennzeichnet durch im Querschnitt kreissegmentartige Wannen (12).

9. Vorrichtung nach Anspruch 8, dadurch gekennzeichnet, daß der Rand der Wannen (12) Rastaussparungen (8) für die Halteelemente (9, 9') der Abdeckung (4) aufweist.

10. Vorrichtung nach Anspruch 8 oder 9, gekennzeichnet durch polygonale Begrenzungsplatten (15), die randseitige Anlageflächen für die Wannen (12) aufweisen.

11. Vorrichtung nach Anspruch 10, dadurch gekennzeichnet, daß die Anlageflächen Begrenzungs- oder Einschubstege (11) für die Wannen (12) aufweisen.

12. Vorrichtung nach den Ansprüchen 1 bis 11, dadurch gekennzeichnet, daß zur Verbindung der Wannen (2, 12) untereinander ein Wannenlängsrand mit einer Hakenleiste (13) versehen ist.

13. Vorrichtung nach einem der vorhergehenden Ansprüche, dadurch gekennzeichnet, daß die Begrenzungsplatten (5, 15) eine axiale Bohrung für einen Spieß (3) aufweisen.

14. Vorrichtung nach einem der Ansprüche 1 bis 13, dadurch gekennzeichnet, daß zusätzlich zum Spieß (13) ein Verbindungsgestänge (22) zwischen den Begrenzungsplatten (5, 15) angeordnet ist.

Fig. 1

0140237

Fig 2

0140237

**Fig 3**

**Fig 4**

Fig 5

Fig 6.

Fig 7b.

13.

12.

Fig.A.7

13.

Fig. 9.

9'

4.

9.

Fig 8.

11.

15.

15.

0140237

Fig. 10

Fig. 11